# EUROPÄISCHE PATENTSCHRIFT

(11) **EP 2 789 498 B1**
(45) Veröffentlichungstag und Bekanntmachung des Hinweises auf die Patenterteilung: **16.03.2016**
(21) Anmeldenummer: 13001846.8
(22) Anmeldetag: 10.04.2013
(51) Int. Cl.: B60M 1/26

(54) **Nachspanneinrichtung für Kettenfahrleitungen elektrischer Bahnen**
Tension adjustment device for catenaries of electrical railways
Dispositif de réglage de tension pour caténaires à bandes électriques

(43) Veröffentlichungstag der Anmeldung: 15.10.2014
(73) Patentinhaber: Furrer + Frey AG, 3000 Bern 6 (CH)
(72) Erfinder: Furrer, Beat, CH-3012 Bern (CH); Casali, Bruno, CH-3125 Toffen (CH)
(74) Vertreter: von Bülow, Tam

(56) Entgegenhaltungen:
- EP-A1- 1 787 853
- DE-A1- 19 524 751
- DE-B3-102012 003 579
- DE-C- 709 279
- DE-U1- 9 111 420

## Beschreibung

Die Erfindung bezieht sich auf eine Nachspanneinrichtung für Kettenfahrleitungen elektrischer Bahnen gemäß dem Oberbegriff des Patentanspruches 1.

Eine solche Nachspanneinrichtung ist aus der gattungsgemäßen DE 10 2012 003 579 B3 bekannt. Zum Nachspannen von Fahrleitungen von Kettenfahrleitungen elektrischer Bahnen werden ein Tragseil und einen Fahrdraht jeweils mit Federelementen für das Nachspannen verbunden. Die Federelemente sind an einer vertikalen Säule befestigt, die ihrerseits an einem horizontalen Abspannbalken eines Portalrahmens befestigt ist. An einem Ende der vertikalen Säule ist eine Umlenkrolle angeordnet, an der der nachzuspannende Fahrdraht nach oben zum zugeordneten Federelement umgelenkt wird.

Die vertikale Säule ist dort fest mit dem horizontalen Abspannbalken verbunden, wobei die Federelemente über Ausleger mit der vertikalen Säule verbunden sind. Das mit dem Tragseil verbundene Federelement ist auf der zur nachzuspannenden Strecke hinweisenden Seite der vertikalen Säule angebracht, während das für das Nachspannen des Fahrdrahtes vorgesehene Federelement auf der gegenüberliegenden Seite der vertikalen Säule befestigt ist. Weiter sind dort beide Federelemente oberhalb der Abspannbalken angeordnet. Die Position der Federelemente und der Umlenkrolle ist somit fest vorgegeben und muss für jeden Einzelfall durch entsprechende Dimensionierung der vertikalen Säule festgelegt werden. Dies ist beispielsweise dann problematisch, wenn ein horizontaler Abspannbalken mehrere Gleise mit unterschiedlicher Höhenlage überspannt.

Die DE 195 24 751 1 zeigt eine Hängesäule für den Fahrzeug-Oberleitungsbau mit einem Befestigungskopf, der eine Grundplatte und eine hieran befestigte Rohrführung aufweist sowie ein Rohr, welches in Rohrführung einsteckbar und die mit dieser kraftschlüssig jedoch lösbar verbindbar ist.

Die DE 91 11 420 U1 zeigt eine ähnliche rohrförmige Hängesäule, die mit einem Kugelkopf in einem Grundkörper gehalten ist.

Die DE 709 279 C zeigt eine Mastschelle für Rohrmaste in Form eines geschlossenen Ringes, der über einen Mast gezogen und durch einen oder mehrere Schäkel fest an den Mast gepresst wird. Der Schäkel besitzt die Form eines U-Bügels, dessen Öffnung ein Bolzen verschließt.

Die EP 1787853 A1 zeigt ein Tragwerk für eine Fahrleitung mit einem sich in einer Längsrichtung erstreckenden Isolator, der an der Decke des Tunnels befestigbar ist. Das Tragwerk hat einen Tragarm mit einer Tragseilhalterung und einem Spurhalter mit einer Fahrdrahthalterung, der mit dem Tragarm verbunden ist. Der Isolator ist quer zu seiner Längsrichtung mit dem Tragarm verbunden, so dass sich ein in der Fahrdrahthalterung gehaltener Fahrdraht und Längsrichtung des Isolators in der Projektion auf die Horizontale im wesentlichen in derselben Richtung erstrecken.

Eine weitere Nachspanneinrichtung ist aus der EP 2 106 956 A1 bekannt. Zum Nachspannen von Fahrleitungen in einem Tunnel sind Federelemente an einer vertikalen Säule befestigt, wobei die vertikale Säule in gerader Linie zu der nachzuspannenden Fahrleitung angeordnet ist und der Fahrdraht und das Tragseil unter der Befestigungsebene der vertikalen Säule angeordnet sind.

Zur Energieeinspeisung elektrischer Bahnen werden als Oberleitungen üblicherweise sogenannte Kettenfahrleitungen verwendet, die ein Tragseil aufweisen, das nach Art einer Kettenlinie durchhängt, sowie einen an dem Tragseil aufgehängten Fahrdraht, der vom Stromabnehmer der Bahn beschliffen wird und daher möglichst konstante Höhe über dem Gleis haben soll. Aufgrund von Temperaturschwankungen der Umgebungstemperatur, die üblicherweise im Bereich von etwa -20 °C bis +80 °C liegen können, ändert sich die Länge der Tragseile und der Fahrdrähte. Um trotz dieser Längenänderung eine konstante Höhe des Fahrdrahtes über dem Gleis zu erhalten, werden Tragseile und Fahrdrähte nachgespannt, was herkömmlich über Klinkenräder und Gewichte erfolgt, die an Masten befestigt sind.

Die Masten stehen naturgemäß neben dem Gleis, was bedingt, dass Nachspannseile quer zu den Tragseilen und Fahrdrähten seitlich abgeführt werden müssen. Wenn die Nachspannvorrichtungen an einem Mast angebracht sind, können keine einfeldrigen Nachspannungen gebaut werden. Vielmehr bedingt diese Anordnung dann eine Nachspannung über drei Felder. Bei der dreifeldrigen Nachspannung müssen die Kettenwerke jedoch überkreuzt werden, was im Falle von Störungen an den Fahrleitungen ungünstig ist, weil dann in der Regel die beiden Kettenfahrleitungen, nämlich die ankommende und die weiterlaufende, betroffen sind.

Als Tragwerk werden häufig Portalrahmen eingesetzt, mit zwei vertikalen Masten und zwei übereinander angeordneten horizontalen Abspannbalken, wobei der Fahrdraht über eine isolierte Auslegerkonstruktion unterhalb des unteren Abspannbalkens durchgeführt wird, während das Tragseil über einen ähnlichen isolierten Ausleger zwischen dem oberen und dem unteren Abspannbalken durchgeführt wird.

Die Fahrleitungen, die Tragseil und Fahrdraht enthalten, werden abschnittsweise verlegt, mit einer Überlappung in ein- oder mehrfeldriger Ausführung (vgl. DE 199 07 516 A1 oder DE 25 06 385 C3). Im Übergangsbereich verlaufen die Fahrdrähte von zwei aneinander grenzenden Strecken über einen gewissen Abschnitt parallel zueinander, so dass der Stromabnehmer der Bahn immer mindestens einen der beiden Fahrdrähte kontaktiert. Auch kann im Übergangsbereich eine Streckentrennung stattfinden, so dass bei Wartungs- und Reparaturarbeiten immer nur eine Strecke spannungsfrei geschaltet werden muss. Die Länge einer Strecke liegt in der Größenordnung von 1200 m. Zum Nachspannen werden Gewichte oder Federn eingesetzt (DE 20 48 86 A, DE 28 34 898 A1) und in neuerer Zeit auch Nachspannvorrichtungen mit Spiralfedern, wie sie in der EP 2 066 523 B1 beschrieben sind. Auch dort sind aber Spanneinrichtungen mit Spiralfedern an seitlich neben der Strecke stehenden vertikalen Masten befestigt, was für die Verlegung der Fahrleitungen ungünstig ist, da Fahrdraht und Fahrleitung seitlich von der Strecke herausgeführt werden müssen, was komplizierte Umlenkkonstruktionen bedingt.

Das Verlegen der Fahrleitungen, also von Tragseil und Fahrdraht, erfolgt durch spezielle Verlegemaschinen, wie sie in der EP 0 962 354 B1 und WO 2005/1157393 A1 beschrieben sind.

Aufgabe der Erfindung ist es, die Nachspanneinrichtung für Kettenfahrleitungen elektrischer Bahnen der eingangs genannten Art dahingehend zu verbessern, dass sie flexibler und einfacher an gegebene Streckenverhältnisse angepasst werden kann.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Grundgedanke der Erfindung liegt darin, die Anbringung der Federelemente und der Umlenkrolle an der vertikalen Säule dadurch flexibel und höhenverstellbar zu machen, dass die vertikale Säule ein Rohr ist und die Federelemente über Auslegerarme mit Rohrschellen an der vertikalen Säule befestigt sind. Damit können die Höhenlage und die Winkelausrichtung der Federelemente und der Umlenkrolle feinjustierbar den jeweiligen Verhältnissen angepasst werden.

Nach einer Weiterbildung der Erfindung kann auch die vertikale Säule mittels Rohrschellen an dem Abspannbalken befestigt werden, so dass auch zusätzlich die vertikale Position der vertikalen Säule stufenlosen einstellbar ist.

Die vertikale Säule kann dabei ein hohlzylindrisches Rohr mit kreisförmigem Querschnitt sein. Sie kann aber auch ein Rohr mit rechteckigem Querschnitt sein, wobei dann die Rohrschellen der Kontur der vertikalen Säule angepasst sind und dann als sogenannte U-Bügel geformt sind.

Dem Fachmann ist klar, dass die vertikalen Säulen auch in anderer Weise an dem Abspannbalken befestigt werden können, beispielsweise durch Anschrauben oder Anschweißen.

Nach einer Weiterbildung der Erfindung kann die Höhenlage der vertikalen Säule zusätzliche dadurch fixiert und gesichert werden, dass die vertikale Säule in Längsrichtung verteilt angeordnete Löcher hat, durch die ein Fixierbolzen gesteckt wird, der an dem horizontalen Abspannbalken abgestützt ist. In analoger Weise können auch die Federelemente in vertikaler Richtung durch Bolzen an der vertikalen Säule gesichert und fixiert werden.

Zur vereinfachten Verlegung der Fahrleitungen sind bei einer Weiterbildung der Erfindung beide Federelemente, nämlich das für das Tragseil und das für den Fahrdraht, sowie die Umlenkrolle für den Fahrdraht auf der zur nachzuspannenden Strecke weisenden Seite der vertikalen Säule angebracht.

Wenn die vertikale Säule als Rohr mit kreisförmigem Querschnitt ausgebildet ist, können die vertikale Säule und damit die Federelemente und die Umlenkrolle jeweils exakt zum jeweils nachzuspannenden Tragseil und Fahrdraht ausgerichtet werden.

Mit der Erfindung ist es somit möglich, eine bestmögliche geometrische Anpassung der Kettenfahrleitung und insbesondere des Fahrdrahtes an bestehende Gleisanlagen zu erreichen. Oftmals sind bei mehrspurigen Strecken die Gleise nicht in einer Ebene angeordnet, was zu unterschiedlichen Höhenlagen des Fahrdrahtes führt. Damit hat der Fahrdraht zu einem horizontalen Anspannbalken unterschiedliche Abstände, weil die Höhe des Fahrdrahtes über dem Gleis fest vorgegeben ist und insbesondere bei Strecken, die mit höheren Geschwindigkeiten befahren werden, nur sehr enge Toleranzen haben darf. Somit ist es von wesentlichem Vorteil, dass die Federelemente und damit auch die Kettenfahrleitung stufenlos höhenverstellbar ist.

Im Folgenden wird die Erfindung anhand eines Ausführungsbeispieles im Zusammenhang mit der Zeichnung ausführlicher erläutert. Es zeigt:
- Fig.1: eine Prinzipskizze einer Kettenfahrleitung elektrischer Bahnen mit zwei Streckenabschnitten und einem Übergangsbereich;
- Fig.2: eine Ansicht eines Portalrahmens mit Nachspanneinrichtung, gesehen in Längsrichtung einer Strecke;
- Fig.3: eine Seitenansicht der Nachspanneinrichtung nach der Erfindung;
- Fig.4: eine Stirnansicht der Nachspanneinrichtung gesehen in Längsrichtung der nachzuspannenden Strecke; und
- Fig.5: eine Draufsicht auf die Nachspanneinrichtung der Fig. 3.

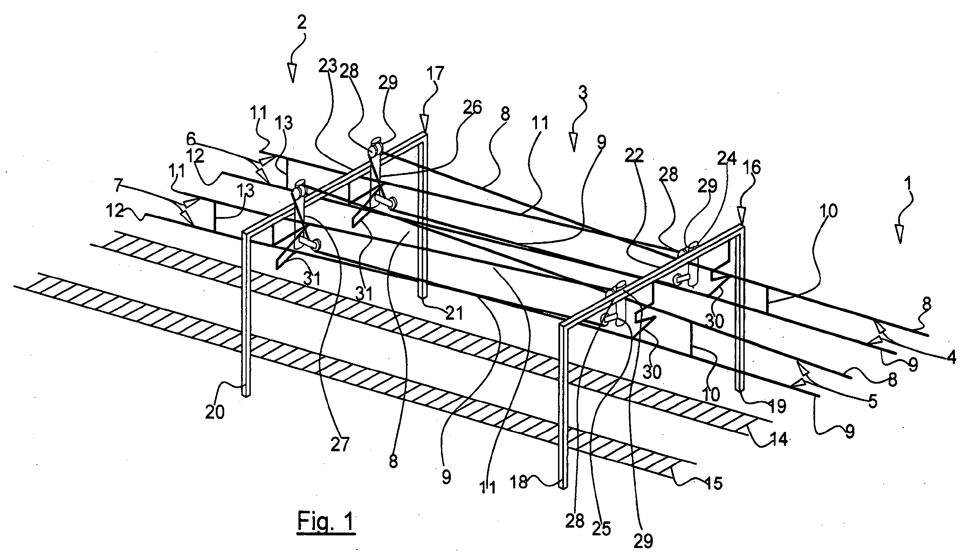

Fig. 1 zeigt Kettenfahrleitungen mit einem ersten Streckenabschnitt 1, einem zweiten Streckenabschnitt 2 und einem Übergangsbereich 3, in welchem sich Fahrleitungen 4 und 5 des ersten Streckenabschnittes mit Fahrleitungen 6 und 7 des zweiten Streckenabschnittes 2 überlappen. Die Fahrleitungen 4 und 5 des ersten Streckenabschnittes 1 haben jeweils ein Tragseil 8 und einen Fahrdraht 9, wobei der Fahrdraht 9 über Hängedrähte 10 an dem Tragseil 8 aufgehängt ist. In gleicher Weise haben die Fahrleitungen 6 und 7 des zweiten Streckenabschnittes 2 je ein Tragseil 11 und einen Fahrdraht 12, wobei die Fahrdrähte 12 ebenfalls über Hängedrähte 13 am Fahrdraht 11 aufgehängt sind. Weiter sind zwei Gleise 14 und 15 zu sehen, die eine Fahrebene definieren.

Die Fahrdrähte 9 und 12 werden von einem Stromabnehmer einer elektrischen Bahn beschliffen. Im Übergangsbereich 3 verlaufen die Fahrdrähte 9 und 12 so, dass mindestens einer der beiden Fahrdrähte 9, 12 vom Stromabnehmer berührt wird. Der Übergangsbereich 3 kann auch als sogenannte Streckentrennung dienen, sofern die Fahrdrähte 9 und 12 elektrisch voneinander getrennt sind. Im Übergangsbereich 3 findet auch ein Nachspannen der Fahrleitungen 4-7 statt und zwar zwischen zwei Portalrahmen 16 und 17, die jeweils zwei vertikale Masten 18, 19 und 20, 21 haben, deren obere Enden jeweils durch einen horizontalen Abspannbalken 22, 23 miteinander verbunden sind.

An dem zum ersten Streckenabschnitt 1 liegenden Abspannbalken 22 sind vertikale Säulen 24 und 25 befestigt, an denen die Fahrleitungen 6 und 7 des zweiten Streckenabschnittes 3 enden. In entsprechender Weise sind am Abspannbalken 23, der zum zweiten Streckenabschnitt 2 weist, gleiche vertikale Säulen 26 und 27 angebracht, an denen die Fahrleitungen 4 und 5 des ersten Streckenabschnittes 1 enden.

An jeder der vertikalen Säulen 24-27 sind je zwei Federelemente 28, 29 befestigt, wobei das jeweils dort endende Tragseil 8, 11 am einen Federelement 29 und der jeweils dort endende Fahrdraht 9, 12 mit dem anderen Federelement 28 verbunden ist. Die Federelemente dienen zum Nachspannen von Tragseil und Fahrdraht. Beispielsweise können hierfür Federelemente der Firma Pfisterer Kontaktsysteme GmbH & Co. KG, Rosenstraße 44, 73650 Wintersbach, Deutschland, verwendet werden, die unter der Bezeichnung Tensorex®C+ vertrieben werden und in der EP 2 066 523 B1 beschrieben sind. Generell enthalten diese Federelemente eine Spiralfeder, die mit einer oder zwei Scheiben gekoppelt ist, an der der entsprechende Draht bzw. das entsprechende Seil auf- und abgewickelt wird.

Die Enden der Tragseile 8, 11 und der Fahrdrähte 9, 12 sind vor ihrer Befestigung an den Federelementen durch einen in Fig. 1 nicht dargestellten Isolator gegenüber dem Portalrahmen 16, 17 elektrisch isoliert. Weiter sind die jeweils zu einem der Portalrahmen 16 und 17 führenden Tragseile und Fahrdrähte im Übergangsbereich 3 gegenüber der von den Gleisen 14 und 15 gebildeten Fahrebene leicht schräg geneigt. Für die Fahrdrähte 9 und 12 ist dies auch deswegen erforderlich, damit der Stromabnehmer einer elektrischen Bahn nicht den vor der vertikalen Säule liegenden Isolator berührt.

Schließlich ist aus Fig. 1 noch zu erkennen, dass die Fahrleitungen 4 und 5 des ersten Streckenabschnittes 1 an dem zum ersten Streckenabschnitt nahegelegenen ersten Portalrahmen 16 durch Ausleger 30 gehalten sind, die ihrerseits an dem Abspannbalken 22 befestigt sind. In gleicher Weise sind am Portalrahmen 17 entsprechende Ausleger 31 angebracht, die die Fahrleitungen 6 und 7 dort halten. Die Tragseile und Fahrdrähte der Fahrleitungen sind in ihrem Verlauf ab dem jeweiligen Ausleger 30, 31 zum gegenüberliegenden Portalrahmen gegenüber der Fahrebene von dieser fortweisend geneigt.

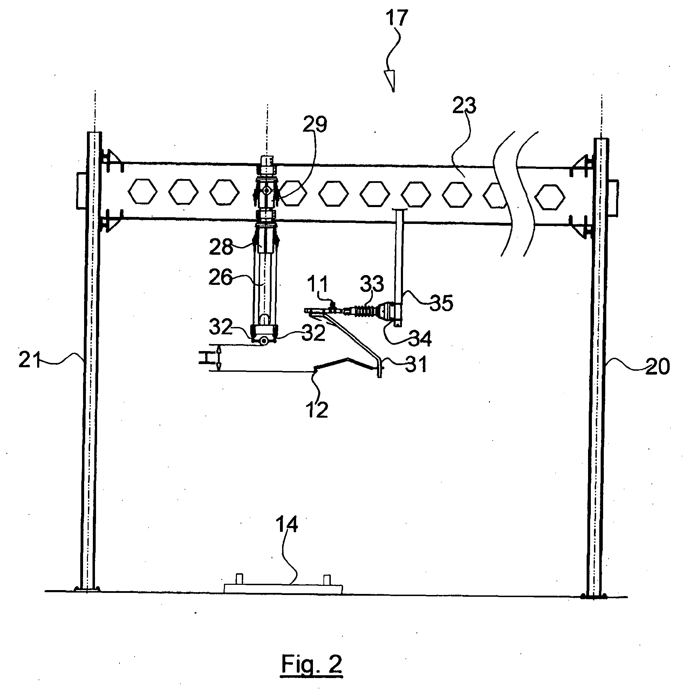

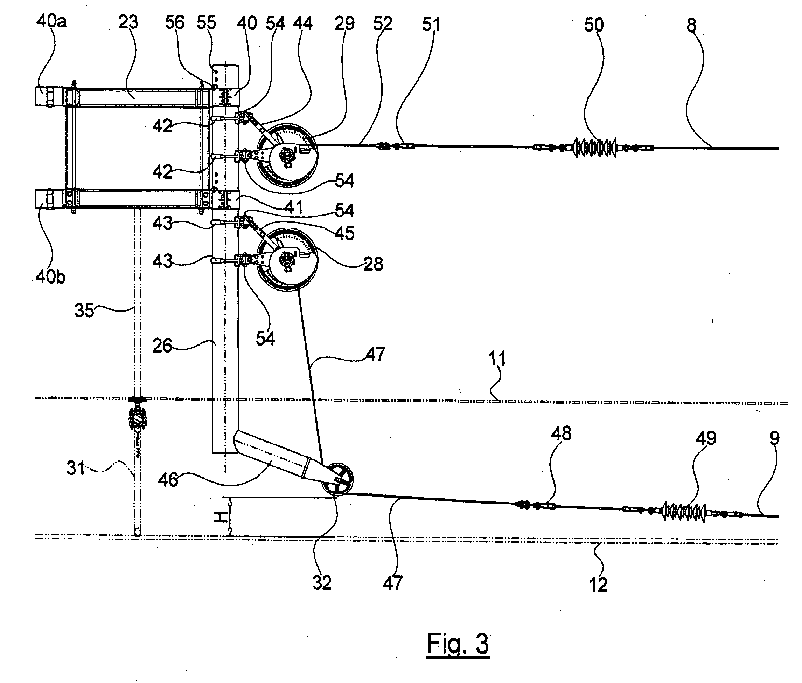

Fig. 2 zeigt eine teilweise abgeschnittene Ansicht einer Nachspanneinrichtung, gesehen von dem zweiten Streckenabschnitt 2 auf den Portalrahmen 17, der die beiden vertikalen Masten 20 und 21 und den horizontalen Abspannbalken 23 aufweist. An dem horizontalen Abspannbalken 23 ist auf der zum dritten Streckenabschnitt hinweisenden Seite die vertikale Säule 26 befestigt, die an ihrem unteren, zum Gleis 14 weisenden Ende zwei Umlenkrollen 32 trägt, über die der Fahrdraht 9, der vom ersten Streckenabschnitt 1 und dem Übergangsbereich 3 kommt, geführt ist und vertikal nach oben zu dem Federelement 28 verläuft, was detaillierter im Zusammenhang mit Fig. 3 beschrieben wird.

Das von dem ersten Streckenabschnitt 1 und dem Übergangsbereich 3 kommende Tragseil 8 wird zu einem zweiten Federelement 29 geleitet, das oberhalb des ersten Federelements 28 an der vertikalen Säule 26 befestigt ist.

An dem Abspannbalken 23 ist weiterhin der Ausleger 31 befestigt, der von dem Abspannbalken 23 nach unten in Richtung zum Gleis 14 ragt. Der Ausleger 31 kann in bekannter Weise Z-förmig sein. Er trägt an seinem unteren freien Ende den Fahrdraht 12, der vom zweiten Streckenabschnitt 2 kommt. An seinem oberen Schenkel trägt der Ausleger 31 das Tragseil 11, das ebenfalls von dem zweiten Streckenabschnitt 2 kommt. Der obere Arm des Auslegers 31 ist über einen Isolator 33 mit einem Schwenkgelenk 34 verbunden, das eine vertikale Schwenkachse aufweist, damit sich der Ausleger 31 bei Längenänderungen des Tragseiles 11 und des Fahrdrahtes 12 verschwenken kann. Der Ausleger 31 ist schließlich über einen vertikalen Arm 35 an dem Abspannbalken 23 befestigt. Der untere Arm des Auslegers 31 ist um eine parallel zur Fahrtrichtung liegende Schwenkachse schwenkbar gelagert.

Aus Fig. 2 erkennt man weiterhin, dass die beiden Fahrdrähte 9 und 12 im Bereich des Portalrahmens 17 einen Höhenversatz H haben, so dass an dieser Stelle nur der Fahrdraht 12 vom Stromabnehmer einer Bahn beschliffen wird.

Fig. 3 zeigt eine Seitenansicht der Nachspanneinrichtung nach der Erfindung. An dem horizontalen Abspannbalken 23 ist die vertikale Säule 26 befestigt und zwar mittels Rohrschellen 40 und 41. Die vertikale Säule 26 ist ein zylindrisches Rohr mit kreisförmigem Querschnitt. An der vertikalen Säule 26 sind die zwei Federelemente 28 und 29 befestigt und zwar ebenfalls über Rohrschellen 42 und 43, wobei die Federelemente 28 und 29 über Auslegerarme 44 und 45 mit dem Rohrschellen 42 und 43 verbunden sind. Da die vertikale Säule 26 ein kreisrundes Rohr ist, kann sie relativ zu den Rohrschellen 40 und 41 in vertikaler Richtung verschoben und in Umfangsrichtung verdreht werden, so dass die relative Lage der vertikalen Säule 26 gegenüber dem Abspannbalken 23 in einfacher Weise eingestellt werden kann.

Die Auslegerarme 44 und 45 können über vertikale Schwenkachsen 54 an den Rohrschellen 42 und 43 befestigt sein, so dass sie, auch wenn die vertikale Säule 26 einen rechteckigen Querschnitt hat, sich jeweils zur nachzuspannenden Leitung ausrichten können. Damit können auch Situationen beherrscht werden, bei denen der Abspannbalken nicht exakt quer zu Schienenlängsrichtung ausgerichtet ist und beispielsweise in einer Kurve steht.

In gleicher Weise kann über die Rohrschellen 42 und 43 sowohl die vertikale Position der Federelemente 28 und 29 als auch deren Ausrichtung in Umfangsrichtung der vertikalen Säule 26 in einfacher Weise justiert werden.

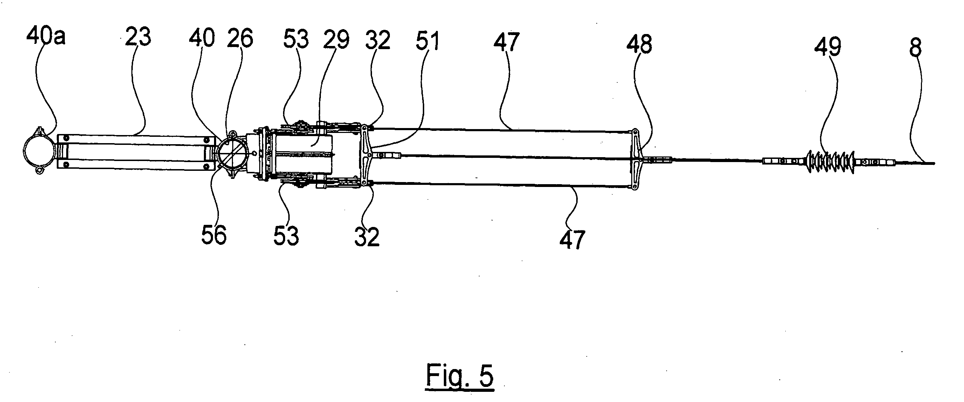

An dem zur Schiene 14 (Fig. 2) weisenden unteren Ende der vertikalen Säule 26 sind über einen Auslegerarm 46 die Umlenkrollen 32 angebracht, die zwei Spanndrähte 47 zu Seilrollen 53a des Federelementes 28 umlenken. Die Spanndrähte 47 sind, wie Fig. 5 zeigt, über einen Verteilerarm 48 und einen Isolator 49 mit dem Fahrdraht 8 verbunden. In ähnlicher Weise ist das Tragseil 8 über einen Isolator 50 und einen Verteilerarm 51 in zwei Spannendrähte 52 aufgeteilt, die zu Seilrollen 53 des zweiten Federelementes 29 führen.

An der vertikalen Säule 26 sind in Längsrichtung mehrere Löcher 55 angebracht, in welche Bolzen 56 eingesteckt werden können, um die vertikale Säule 26 relativ zu den am horizontalen Abspannbalken 23 befestigten Rohrschellen 40 und 41 in vertikaler Richtung zu sichern, so dass auch bei einem Lockern der Verschraubung der Rohrschellen 40 und 41 eine einmal eingestellte vertikale Position fixiert bleibt.

Optional können auch die Rohrschellen 42 und 43 für die Befestigung der Federelemente 29 und 28 durch entsprechende Löcher und Bolzen 56a gesichert werden.

Falls in Einzelfällen gewünscht, können an einem horizontalen Abspannbalken 23 auch beidseitig Nachspanneinrichtungen mit entsprechenden vertikalen Säulen und Federelementen angebracht sein, was in Fig. 3 durch Rohrschellen 40a und 40b angedeutet ist, die gegenüberliegend zu den Rohrschellen 40 und 41 an dem Abspannbalken 23 angebracht sind.

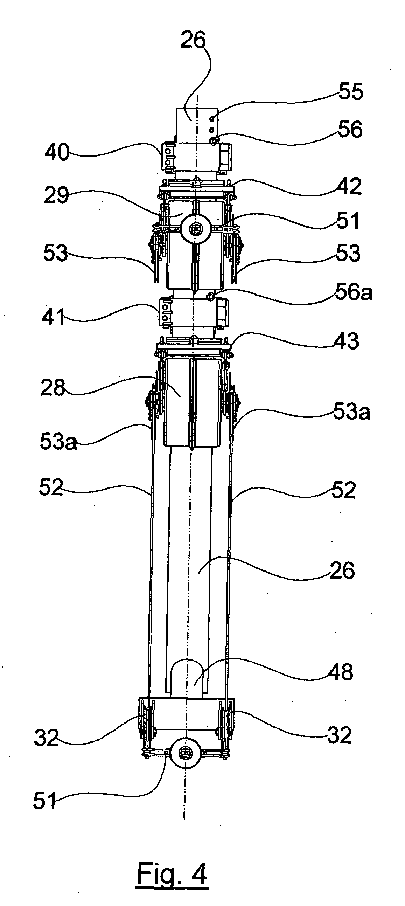

In der Stirnansicht der Fig. 4 und der Draufsicht der Fig. 5 ist noch besser zu erkennen, wie der Fahrdraht 8 in zwei Spanndrähte 47 aufgeteilt ist, die beide über die Umlenkrolle 32 zu den entsprechenden Seilrollen 53a des Federelementes 28 umgelenkt werden. In gleicher Weise ist auch für das Nachspannen des Tragseiles 8 dieses in zwei Spanndrähte 52 aufgeteilt, die zu Seilrollen 53 des Federelementes 29 geführt sind.

Mit der Erfindung wird zusammengefasst eine gegenüber dem Stand der Technik wesentlich vereinfachte Nachspanneinrichtung geschaffen, die in einfacher Weise individuell an die Gegebenheiten der Baustelle anpassbar ist und insbesondere hinsichtlich der Einstellung der Höhenlage und Ausrichtung der Federelemente und der Umlenkrollen vereinfacht ist. Ebenso ist die Montage vereinfacht. In der Praxis wird man sich daher auch auf zwei oder drei verschiedene Längen der vertikalen Säulen 26 beschränken können, um alle Gegebenheiten abfangen zu können und einen Überstand der vertikalen Säule 26 über den Abspannbalken 23 zu vermeiden. Eine individuelle Fertigung der vertikalen Säulen sowie eine aufwändige Lagerhaltung sind daher überflüssig. Durch die stufenlose Einstellbarkeit der vertikalen Lage und der Winkelausrichtung in Umfangsrichtung lässt sich die Nachspanneinrichtung in einfacher Weise an die jeweiligen Gegebenheiten anpassen.

Mit der Nachspanneinrichtung nach der Erfindung können an einem Querträger gleichzeitig Tragseil und Fahrdraht abgespannt werden, ohne dass Nachbargleise gestört werden müssen, die auch während des Baus weiterhin befahren werden können.

## Patentansprüche

1. Nachspanneinrichtung für Kettenfahrleitungen elektrischer Bahnen mit einem Tragseil (8) und einem Fahrdraht (9), die jeweils mit Federelementen (26, 29) für das Nachspannen verbunden sind, wobei die Federelemente (28, 29) an einer vertikalen Säule (26) befestigt sind, die ihrerseits an einem horizontalen Abspannbalken (23) eines Portalrahmens (17) befestigt ist, und wobei an einem Ende der vertikalen Säule (26) mindestens eine Umlenkrolle (32) angeordnet ist, an der der nachzuspannende Fahrdraht (9) direkt oder indirekt nach oben zum zugeordneten Federelement (28) umgelenkt ist,
**dadurch gekennzeichnet, dass** die vertikale Säule (26) ein Rohr ist und dass die Federelemente (28, 29) über Auslegerarme (44, 45) mit Rohrschellen (42, 43) an der vertikalen Säule (26) befestigt sind und dass die vertikale Säule (26) mittels Rohrschellen (40, 41) an dem horizontalen Abspannbalken (23) befestigt ist.

2. Nachspanneinrichtung für Kettenfahrleitungen nach Anspruch 1, **dadurch gekennzeichnet, dass** die vertikale Säule (26) eine Vielzahl in ihrer Längsrichtung verteilt angeordneten Löchern (55) aufweist, in die Bolzen (56) einsetzbar sind, zum Fixieren der vertikalen Säule (26) in vertikaler Richtung.

3. Nachspanneinrichtung für Kettenfahrleitungen nach Anspruch 1-2, **dadurch gekennzeichnet, dass** die vertikale Säule (26) in Längsrichtung verteilt angeordnete Löcher (55) aufweist, in die Bolzen (56a) einsetzbar sind, zum Fixieren der Rohrschellen (42,43) der Federelemente (28, 29) in vertikaler Richtung.

4. Nachspanneinrichtung für Fahrleitungen nach einem der Ansprüche 1-3, **dadurch gekennzeichnet, dass** beide Federelemente (28, 29) auf der zur nachzuspannenden Fahrleitung weisenden Seite des horizontalen Abspannbalkens (23) angeordnet sind.

5. Nachspanneinrichtung für Fahrleitungen nach einem der Ansprüche 1-4, **dadurch gekennzeichnet, dass** an dem nach unten weisenden Ende des vertikalen Balkens (26) ein Auslegerarm (46) angeordnet ist, an dem die mindestens eine Umlenkrolle (33) befestigt ist.

6. Nachspanneinrichtung für Fahrleitungen nach einem der Ansprüche 1-5, **dadurch gekennzeichnet, dass** die beiden Federelemente (28,29) vertikal übereinander angeordnet sind.

7. Nachspanneinrichtung für Fahrleitungen nach einem der Ansprüche 1-6, **dadurch gekennzeichnet, dass** das Federelement (29) für das Nachspannen des Tragseiles (8) auf Höhe des horizontalen Abspannbalkens (23) angeordnet ist und dass das Federelement (28) für das Nachspannen des Fahrdrahtes (9) unterhalb des horizontalen Abspannbalkens (23) angeordnet ist.

8. Nachspanneinrichtung für Fahrleitungen nach einem der Ansprüche 1-7, **dadurch gekennzeichnet, dass** beidseitig des horizontalen Abspannbalkens (23) Rohrschellen (40, 41; 40a, 40b) angeordnet sind, zur jeweiligen Befestigung der vertikalen Säulen (26).

9. Nachspanneinrichtung für Fahrleitungen nach einem der Ansprüche 1-8, **dadurch gekennzeichnet, dass** die Federelemente (28, 29) jeweils zwei Seilscheiben (53,53a) aufweisen, wobei der nachzuspannende Fahrdraht (9) und das nachzuspannende Tragseil (8) über je ein Spreizelement (48, 51) in zwei Spanndrähte (47, 52) aufgeteilt sind und die Spanndrähte (47, 52) mit den jeweiligen Seilscheiben (53,53a) verbunden sind.

10. Nachspanneinrichtung nach einem der Ansprüche 1-9, **dadurch gekennzeichnet, dass** die vertikale Säule (26) ein Rohr mit kreisförmigem oder rechteckigem Querschnitt ist.

## Claims

1. Retensioning device for catenaries of electrical trains with a supporting cable (8) and a contact wire (9), that are each connected with spring elements (26, 29) for the retensioning, wherein the spring elements are mounted at a vertical pillar, which is itself mounted at a horizontal bracing beam (23) of a portal frame (17), and wherein at one end of the vertical pillar (26) at least one redirection pulley (32) is arranged, at which the contact wire (9) that is to be retensioned directly or indirectly is redirected upwardly to the allocated spring element (28),
**characterized in that**, the vertical pillar (26) is a pipe and **in that** the spring elements (28, 29) are mounted at the vertical pillar (26) via cantilever arms (44, 45) by using pipe clamps (42, 43) and **in that** the vertical pillar (26) is mounted at the horizontal bracing beam (23) by using pipe clamps (40, 41).

2. Retensioning device for catenaries according to claim 1,
**characterized in that**, the vertical pillar (26) includes a plurality of holes (55) that are distributedly arranged in its lengths direction and in which bolts (56) are insertable for fixing the vertical pillar in vertical direction.

3. Retensioning device for catenaries according to claim 1-2,
**characterized in that**, the vertical pillar includes holes (55) that are distributed in lengths direction and in which the bolts (56a) are insertable to fix the pipe clamps (42, 43) of the spring elements (28, 29) in vertical direction.

4. Retensioning device for catenaries according to one of the claims 1-3,
**characterized in that**, both spring elements (28, 29) are arranged on the side of the horizontal bracing beam (23) that is directed to the contact wire to be retensioned.

5. Retensioning device for catenaries according to one of the claims 1-4,
**characterized in that**, a cantilever arm (46) is arranged that the end of the vertical beam that is directed downwardly at which the at least one redirection pully (33) is mounted.

6. Retensioning device for catenaries according to one of the claims 1-5,
**characterized in that**, the both spring elements (28, 29) are arranged vertically above each other.

7. Retensioning device for catenaries according to one of the claims 1-6,
**characterized in that**, the spring element (29) is arranged at a level of the horizontal bracing beam (23) for retensioning the supporting cable (8), and **in that** the spring element (28) is arranged below the horizontal bracing beam (23) for retensioning the contact wire (9).

8. Retensioning device for catenaries according to one of the claims 1-7,
**characterized in that**, the both pipe clamps (40a, 40b) are arranged at both sides of the horizontal bracing beam (23) for respectively mounting the vertical columns (26).

9. Retensioning device for catenaries according to one of the claims 1-8,
**characterized in that**, the spring elements (28, 29) includes respectively two cable discs (53, 53a), wherein the contact wire (9) to be retensioned and the supporting cable (8) to be retensioned are respectively devided via one spreading element (48, 51) into two tentioning wires (47, 52) and wherein the tensioning wires (47, 52) are connected with the respective cable discs (53, 53a).

10. Retensioning device of the claims 1-9,
**characterized in that**, the vertical column (26) is a pipe with circular or rectangular section.

## Revendications

1. Dispositif d'ajustement de tension pour des lignes caténaires de voies électriques, comprenant un câble porteur (8) et un fil de contact (9), qui sont reliés respectivement à des éléments formant ressorts (26, 29) en vue de l'ajustement de tension, sachant que les éléments formant ressorts (28, 29) sont fixés au niveau d'une colonne (26) verticale, laquelle est fixée quant à elle au niveau d'une poutre d'abaissement de tension (23) horizontale d'un cadre de portique (17), et sachant qu'au moins un galet de renvoi (32) est disposé au niveau d'une extrémité de la colonne (26) verticale, au niveau duquel le fil de contact (9) dont la tension est à ajuster est renvoyé directement ou indirectement vers le haut en direction de l'élément formant ressort (28) associé,
**caractérisé en ce que** la colonne (26) verticale est un tube, et **en ce que** les éléments formant ressorts (28, 29) sont fixés par l'intermédiaire de bras de console (44, 45) par des colliers d'attache (42, 43) au niveau de la colonne (26) verticale, et **en ce que** la colonne (26) verticale est fixée au moyen de colliers d'attache (40, 41) au niveau de la poutre d'abaissement de tension (23) horizontale.

2. Dispositif d'ajustement de tension pour des lignes caténaires selon la revendication 1, **caractérisé en ce que** la colonne (26) verticale présente une pluralité de trous (55) disposés de manière répartie dans son sens longitudinal, dans lesquels peuvent être insérés des boulons (56), aux fins de la fixation de la colonne (26) verticale dans le sens vertical.

3. Dispositif d'ajustement de tension pour des lignes caténaires selon la revendication 1 - 2, **caractérisé en ce que** la colonne (26) verticale présente des trous (55) disposés de manière répartie dans le sens longitudinal, dans lesquels peuvent être insérés des boulons (56a), aux fins de la fixation des colliers d'attache (42, 43) des éléments formant ressorts (28, 29) dans le sens vertical.

4. Dispositif d'ajustement de tension pour des lignes de contact selon l'une quelconque des revendications 1 - 3, **caractérisé en ce que** les deux éléments formant ressorts (28, 29) sont disposés sur le côté, pointant en direction de la caténaire dont la tension est à ajuster, de la poutre d'abaissement de tension (23) horizontale.

5. Dispositif d'ajustement de tension pour des lignes de contact selon l'une quelconque des revendications 1 - 4, **caractérisé en ce qu'**est disposé au niveau de l'extrémité pointant vers le bas de la poutre (26) verticale un bras de console (46), au niveau duquel l'au moins un galet de renvoi (33) est fixé.

6. Dispositif d'ajustement de tension pour des lignes de contact selon l'une quelconque des revendications 1 - 5, **caractérisé en ce que** les deux éléments formant ressorts (28, 29) sont disposés verticalement l'un au-dessus de l'autre.

7. Dispositif d'ajustement de tension pour des lignes de contact selon l'une quelconque des revendications 1 - 6, **caractérisé en ce que** l'élément formant ressort (29) est disposé, en vue de l'ajustement de tension du câble porteur (8), à hauteur de la poutre d'abaissement de tension (23) horizontale, et **en ce que** l'élément formant ressort (28) est disposé, en vue de l'ajustement de tension du fil de contact (9), au-dessous de la poutre d'abaissement de tension (23) horizontale.

8. Dispositif d'ajustement de tension pour des lignes de contact selon l'une quelconque des revendications 1 - 7, **caractérisé en ce que** sont disposés, de part et d'autre de la poutre d'abaissement de tension (23) horizontale, des colliers d'attache (40, 41 ; 40a, 40b), aux fins de la fixation respective des colonnes (26) verticales.

9. Dispositif d'ajustement de tension pour des lignes de contact selon l'une quelconque des revendications 1 - 8, **caractérisé en ce que** les éléments formant ressorts (28, 29) présentent respectivement deux poulies à câble (53, 53a), sachant que le fil de contact (9) dont la tension est à ajuster et le câble porteur (8) dont la tension est à ajuster sont divisés en deux fils de tension (47, 52) par l'intermédiaire respectivement d'un élément écarteur (48, 51), et les fils de tension (47, 52) sont reliés aux poulies à câble (53, 53a) respectives.

10. Dispositif d'ajustement de tension selon l'une quelconque des revendications 1 - 9, **caractérisé en ce que** la colonne (26) verticale est un tube présentant une section transversale de forme circulaire ou rectangulaire.
